# EUROPEAN PATENT APPLICATION

(11) **EP 1 873 491 A1**
(43) Date of publication of application: **02.01.2008**
(21) Application number: 06715169.6
(22) Date of filing: 03.03.2006
(51) Int. Cl.: G01C 21/00, G08G 1/09, G08G 1/0969, G09B 29/00, G09B 29/10, H04B 7/26, H04Q 7/34

(54) **NAVIGATION DEVICE**

(30) Priority: 31.03.2005 JP 2005103005
(71) Applicant: Pioneer Design Corporation, Meguro-ku, Tokyo 153-8654 (JP)
(72) Inventor: OMORI, Atsuo, Pioneer Corporation, Tsurugashima-shi, Saitama 350-2288 (JP)
(74) Representative: Tappe, Hartmut
(86) International application number: PCT/JP2006/304086
(87) International publication number: WO 2006/112172

(57) **Abstract**

There is provided a navigation apparatus that can accurately determine a meeting point, based on information about facilities or information about roads, and can reflect the preferences of each operator.

The navigation apparatus (100) of the present embodiment performs communications with the navigation apparatus of the other vehicle, and obtains current location data indicating the current location of the other vehicle and characteristics data indicating the features of the other vehicle. Based on the current location data and the characteristics data of the other vehicle, and road characteristics data and facility characteristics data, the navigation apparatus (100) determines a meeting point, and performs a route guiding operation based on the determined meeting point. In particular, the navigation apparatus (100) of the present embodiment also determines a meeting point, based on preference data that has been registered in advance.

## Description

### TECHNICAL FIELD

The present invention relates to the technical field of navigation apparatuses that perform route guiding operations for mobile objects such as vehicles.

### BACKGROUND ART

In recent years, navigation apparatuses that display a map on a display such as a liquid crystal panel mounted on a vehicle or the like and guide the movement of the vehicle or the like have become popular. Particularly, there recently are navigation apparatuses that perform communications with navigation apparatuses mounted on other vehicles, designate a meeting point of each mobile object, and perform as route guides to the meeting point.

More specifically, such a navigation apparatus that calculates the meeting point and performs as a route guide to the meeting point performs communications with a navigation apparatus (hereinafter referred to as the "other vehicle navigation apparatus") mounted on another vehicle (hereinafter referred to as the "other vehicle"), and obtains the current location of the other vehicle. Based on the current location of the other vehicle and the current location of own vehicle, the navigation apparatus determines the meeting point to be in a facility near the timewise center point at which both vehicles can arrive in the shortest possible time and at the same time. The navigation apparatus then performs as a route guide to the determined meeting point (see Patent Reference 1, for example) .
Patent Reference 1: Japanese Patent Application Laid-Open No. 2002-139333

### DISCLOSURE OF THE INVENTION

### Problems to be Solved by the Invention

In the conventional navigation apparatus, however, the information about the facility designated as the meeting point is not taken into consideration. Therefore, the designated meeting point may not be suitable as a meeting spot, because the vehicles might arrive at the facility outside the business hours, or there might not be a parking lot. Also, since the conventional navigation apparatus determines the meeting point to be a facility near the timewise center point at which both vehicles can arrive in the shortest possible time and at the same time, the preferences of the operator cannot be reflected in the designation of the meeting point.

To solve one of the above problems, the present invention provides a navigation apparatus that can accurately designate a meeting point, based on information about facilities or information about roads, and can reflect the preferences of the operator.

### Means to Solve the Problems

In order to solve the above problem, one aspect of the invention relates to a navigation apparatus that determines a meeting point at which a mobile object is to meet the other mobile object, and that is mounted on the mobile object to be guided through a route to the meeting point,
the navigation apparatus comprising:
strage means for storing map data and at least one of road data including road characteristics data indicating road characteristics and facility data including facility characteristics data indicating facility characteristics;
fiest acquiring means for acquiring first current location data indicating a current location of the mobile object to be route-guided;
second acquiring means for acquiring second current location data indicating a current location of the other mobile object;
determining means for determining the meeting point to meet the other mobile obj ect, based on the acquired first current location data, the acquired second current location data, and at least one of the stored road characteristics data and the stored facility characteristics data; and
route guiding means for performing a route guiding operation, based on the determined meeting point.

In order to solve the above problem, another aspect of the invention relates to a server device in a navigation system that determines a meeting point of a mobile object and the other mobile object, and performs route guiding to the meeting point,
the server device comprising:
storage means for storing map data and at least one of road data including road characteristics data indicating road characteristics and facility data including facility characteristics data indicating facility characteristics;
first acquiring meansfor acquiring first current location data indicating a current location of the mobile object;
second acquiring means for acquiring second current location data indicating a current location of the other mobile object;
determining means for determining the meeting point to meet the other mobile object, based on the acquired first current location data, the acquired second current location data, and at least one of the stored road characteristics data and the stored facility characteristics data; and
transmitting means for transmitting route guidance information for performing route guiding based on the determined meeting point to a navigation apparatus mounted on each mobile object.

In order to solve the above problem, yet another aspect of the invention relates to a navigation method for determining a meeting point at which a mobile object is to meet the other mobile object, and guiding the mobile object through a route to the meeting point,
the navigation method comprising:
first step for acquiring first current location data indicating a current location of the mobile object;
second step for acquiring second current location data indicating a current location of the other mobile object;
determining step for determining the meeting point to meet the other mobile object, based on the acquired first current location data, the acquired second current location data, and one of road data including road characteristics data indicating road characteristics and facility data including facility characteristics data indicating facility characteristics, the road data and the facility data being stored together with map data in storage means; and
route guiding step for performing a route guiding operation, based on the determined meeting point.

In order to solve the above problem, yet another aspect of the invention relates to a navigation program to be executed by a computer to determine a meeting point of a mobile object and the other mobile object, and to perform route guiding to the meeting point,
the navigation program being executed to cause the computer to function as:
first acquiring means for acquiring first current location data indicating a current location of the mobile object;
second acquiring means for acquiring second current location data indicating a current location of the other mobile object;
determining means for determining the meeting point to meet the other mobile object, based on the acquired first current location data, the acquired second current location data, and one of road data including road characteristics data indicating road characteristics and facility data including facility characteristics data indicating facility characteristics, the road data and the facility data being stored together with map data in storage means; and
route guiding means for performing a route guiding operation, based on the determined meeting point.

### BRIEF DESCRIPTION OF THE DRAWINGS

Fig. 1 is a block diagram showing the structure of one embodiment of a navigation apparatus in accordance with the present invention;
Fig. 2 is a schematic view (I) for explaining the method for determining a meeting area by the meeting point determining unit of the embodiment;
Fig. 3 is a schematic view (II) for explaining the method for determining a meeting area by the meeting point determining unit of the embodiment;
Fig. 4 is a schematic view for explaining the method for determining a meeting point by the meeting point determining unit of the embodiment, based on road characteristics information;
Fig. 5 is a flowchart (I) showing operations to be performed by the meeting point determining unit and the route guiding unit under the control of the system control unit of the embodiment;
Fig. 6 is a flowchart (II) showing operations to be performed by the meeting point determining unit and the route guiding unit under the control of the system control unit of the embodiment;
Fig. 7 is a flowchart (III) showing operations to be performed by the meeting point determining unit and the route guiding unit under the control of the system control unit of the embodiment;
Fig. 8 is a flowchart (IV) showing operations to be performed by the meeting point determining unit and the route guiding unit under the control of the system control unit of the embodiment; and
Fig. 9 is a flowchart (V) showing operations to be performed by the meeting point determining unit and the route guiding unit under the control of the system control unit of the embodiment.

### DESCRIPTION OF REFERENCE NUMERALS

- 100: navigation apparatus
- 110: GPS receiving unit
- 120: sensor unit
- 130: I/F
- 140: data storage unit
- 150: communication control unit
- 160: meeting point determining unit
- 170: destination setting unit
- 180: route searching unit
- 190: route guiding unit
- 200: operating unit
- 210: microphone
- 220: voice recognition circuit
- 230: display unit
- 240: display control unit
- 250: voice processing circuit
- 260: speaker
- 270: system control unit
- 280: ROM/RAM

### BEST MODE FOR CARRYING OUT THE INVENTION

The following is a description of preferred embodiments of the present invention, with reference to the accompanying drawings.

In the following embodiments, a server device of a navigation apparatus or a navigation system according to the present invention is applied to a navigation apparatus or a navigation system that performs route guiding operations for vehicles.

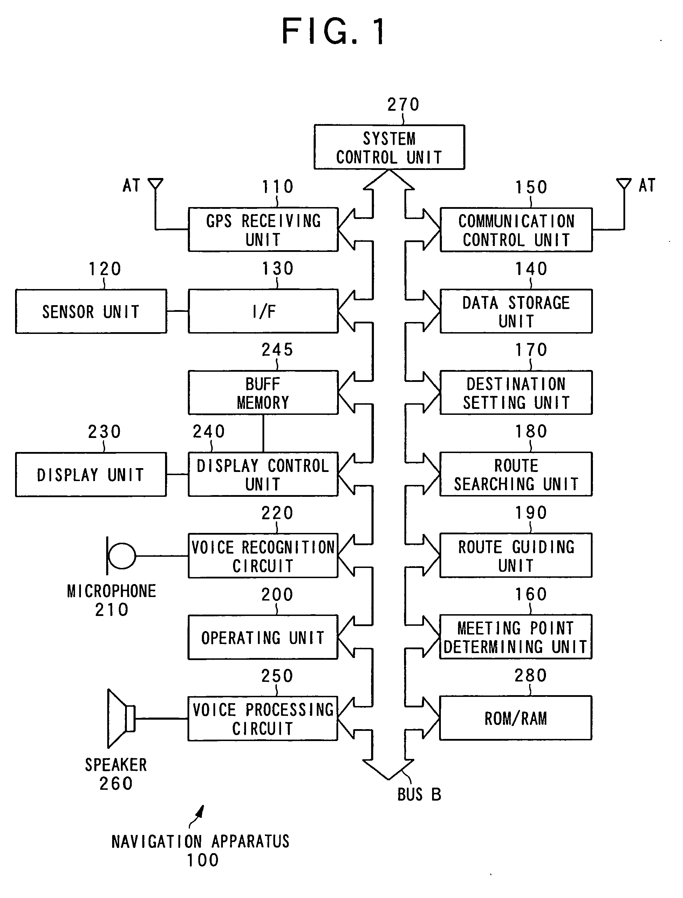

Referring first to Fig. 1, the structure of a navigation apparatus according to the present invention is described. Fig. 1 is a block diagram showing the structure of the navigation apparatus according to the present invention.

The navigation apparatus 100 of this embodiment performs communications with a navigation apparatus mounted on another vehicle (hereinafter referred to as the "other vehicle navigation apparatus"). The navigation apparatus 100 then obtains current location data indicating the current location of the other vehicle, and characteristics data indicating the features of the other vehicle. Based on data indicating the features of roads (hereinafter referred to as the "road characteristics data") and data indicating the features of facilities (hereinafter referred to asthe"facility characteristics data") stored together with map data, as well as the current location data and the characteristics data of the other vehicle, the navigation apparatus 100 determines a meeting point. Based on the determined meeting point, the navigation apparatus 100 performs a route guiding operation (hereinafter referred to simply as the "route guiding"). The navigation apparatus 100 of this embodiment can select the road characteristics data or the facility characteristics data to be used for determining a meeting point. Also, preference data that reflects the preferences of the operator is registered in the navigation apparatus 100 in advance. Based on the registered preference data, the navigation apparatus 100 determines a meeting point.

This navigation apparatus 100 is connected to an antenna AT. The navigation apparatus 100 includes a GPS receiving unit 110 that receives GPS (Global Positioning System) data, a sensor unit 120 that detects travel data such as the running speed of the vehicle, and an interface (hereinafter referred to as the "I/F") 130 that calculates the location of its own vehicle based on the GPS data and the travel data. With those components, the navigation apparatus 100 can recognize the current location of its own vehicle.

The navigation apparatus 100 further includes: a data storage unit 140 that stores facility data including road characteristics information and facility characteristics information, as well as the map data; a communication control unit 150 that performs communications with the other vehicle navigation apparatus; a meeting point determining unit 160 that determines a meeting point, based on own data such as the current location of its own vehicle, the various kinds of data obtained from the other vehicle navigation apparatus 100, and the preference data registered in advance; a destination setting unit 170 that sets the determined meeting point as a destination or a spot on route; a route searching unit 180 that searches for a route, based on the set destination and the map data; and a route guiding unit 190 that performs the route guiding, based on the detected route. With those components, the navigation apparatus 100 performs the route guiding, based on the determined meeting point.

The navigation apparatus 100 further includes: an operating unit 200 that is usedwhen the operator performs various settings and inputs an instruction to the system, and is used when the operator inputs an instruction reflecting the preferences of the operator, particularly when the operator registers the preference data; a microphone 210 that collects voices of the operator; a voice recognition circuit 220 that recognizes an instruction directed to the system, based on the voices collected by the microphone 210; a display unit 230 that display the map data and the location of the vehicle; a display control unit 240 that controls the display unit 230, using a buffer memory 245; a voice processing circuit 250 that generates a voice for route guiding; and a speaker 260. With those components, the navigation apparatus 100 performs various settings and announcements when performing the route guiding.

In addition to the above components, the navigation apparatus 100 includes a system control unit 270 that controls the entire system, and a ROM/RAM 280 that is used for controlling each component and has the preference data registered therein. With those components, the navigation apparatus 100 performing a meeting point determining operation to determine a meeting point, and performs a route guiding operation to guide its own vehicle through an appropriate route, based on the determined meeting point, as well as various operations for the route guiding. Other than the sensor unit 120 and the display unit 230, those components are connected to one another via a bus.

For example, the GPS receiving unit 110 and the sensor unit 120 of this embodiment are equivalent to the first acquiring means of the present invention, and the data storage unit 140 is equivalent to the data storage unit of the present invention. Also, the communication control unit 150 is equivalent to the second acquiring means and the third acquiring means of the present invention, and the meeting point determining unit 160 is equivalent to the determining means and the calculating means of the present invention. Further, the route guiding unit 190 of this embodiment is equivalent to the route guiding means of the present invention, and the operating unit 200 is equivalent to the operating means of the present invention.

The GPS receiving unit 110 receives navigation radio waves from a plurality of artificial satellites belonging to the GPS via the antenna AT. Based on the received radio waves, the GPS receiving unit 110 calculates the pseudo coordinate values of the current location of the moving body, and outputs the pseudo coordinate values as GPS data to the I/F 130.

The sensor unit 120 detects the travel data including the running speed, the acceleration, and the azimuth of the vehicle, and outputs the detected travel data to the I/F 130.

More specifically, the sensor unit 120 detects the running speed of the vehicle, and converts the detected speed into speed data in the form of a pulse or a voltage. The sensor unit 120 then outputs the speed data to the I/F 130. Also, the sensor unit 120 compares the gravity acceleration with the acceleration generated by the movement of the vehicle, to detects the vertical movement of the vehicle. The sensor unit 120 converts the detected acceleration data indicating the movement into a pulse or a voltage, and outputs the pulse or the voltage to the I/F 130. Further, the sensor unit 120 is formed with a so-called gyro sensor that detects the azimuth of the vehicle, which is the traveling direction of the vehicle. The sensor unit 120 then converts the detected azimuth into azimuth data in the form of a pulse or a voltage, and outputs the azimuth data to the I/F 130.

The I/F 130 performs an interface operation between the system control unit 270 and each of the sensor unit 120 and the GPS receiving unit 110. Based on the input GPS data and the traveling data, the I/F 130 calculates the location of the vehicle, and outputs the calculated location of the vehicle as the own location data to the system control unit 270.

The own location data is compared with the map data by the route guiding unit 180, and is used for amapmatching operation and the likes.

The data storage unit 140 is formed with a hard disk, for example. The map data such as road maps and the information necessary for travel guidance (hereinafter referred to as the "map data and the likes") are stored beforehand in the data storage unit 140. Under the control of the system control unit 270, the data storage unit 140 outputs the read map data and the likes to the system control unit 270.

The map data and the likes include the map data containing road configuration data necessary for navigating operations, road width data indicating the widths of roads, and road type data indicating the types of roads. Other than that, in the map data and the likes, the facility data indicating the opening hours of facilities, the parking lots of the facilities, and the features of the parking lots are associated with name data indicating the names of the facilities and the road configuration data. In the map data and the likes, the entire map is divided into a plurality of blocks in a mesh-like fashion, and the map data of each block is managed as a map data block.

When the route guiding is being performed, the data storage unit 140 outputs the stored map data to the display unit 230 and the voice processing circuit 250 in accordance with an instruction from the system control unit 270.

The communication control unit 150 is connected to a network such as a public telephone line or the Internet via the antenna AT. Under the control of the system control unit 270, the communication control unit 150 establishes a communication line with the other vehicle navigation apparatus that is to be joined by its own vehicle, when a meeting point determining operation is performed. Using the established communication line, the communication control unit 150 exchanges predetermined data, and performs a communication control operation for the predetermined data exchanges.

Particularly, after a communication line with the other vehicle navigation apparatus is established, the communication control unit 150 of this embodiment obtains the data formed with the data indicating that the other vehicle is currently performing the route guiding and the data indicating the destination or a spot on route (hereinafter referred to as the "route guidance data"), the current location data indicating the current location of the other vehicle, and the characteristics data of the vehicle having the other vehicle navigation apparatus mounted therein, from the other vehicle navigation apparatus. The communication control unit 150 then outputs those data to the meeting point determining unit 160.

In this embodiment, the characteristics data of a vehicle may include vehicle height data indicating the height of the vehicle, vehicle width data indicating the width of the vehicle, and vehicle length data indicating the length of the vehicle, for example.

In a case where an instruction to perform a meeting point determining operation is input through an operation by the operator, the meeting point determining unit 160, under the control of the system control unit 270, determines a meeting area based on the current location and the destination of its own vehicle and the current location and the destination of the other vehicle, and determines a meeting point that is a spot existing within the meeting area according to the operator instruction and is the spot according to the operator instruction, as described later.

The meeting point determining unit 160 of this embodiment may determine the meeting area to be a region indicated by the map data of one block, or may determine the meeting area to be a region further divided from the map data of one block by a predetermined rule.

The structure and the operation of the meeting point determining unit 160 of this embodiment will be described later in detail.

When a destination or a spot on route is input through an operation by the operator, the destination setting unit 170, under the control of the system control unit 270, searches the data storage unit 140, based on the input destination or the input spot on route. Through the search, the destination setting unit 170 obtains the data necessary for the route search and the route guiding involving the destination or the spot on route (hereinafter referred to as the "destination/on-route related data"), such as the data indicating the latitude and the longitude of the destination or the spot on route, and the data to be used for determining a road adjacent to the destination or the spot on route. The destination setting unit 170 generates data indicating the order in destinations and spots on route designated through operations by the operator (hereinafter referred to as the "ordinal data"), and outputs the ordinal data as well as the destination/on-route related data to the route searching unit 180.

More specifically, when a meeting point is determined by the meeting point determining unit 160 in a meeting point determining operation, the destination setting unit 170 of this embodiment sets the determined meeting point as the next spot on route, or sets the determined meeting point as the destination if a destination and a spot on route are not set. The destination setting unit 170 then generates the ordinal data including the meeting point.

The destination setting unit 170 of this embodiment stores the destination/on-route related data and the ordinal data in the ROM/RAM 280, so that those data can be used in a meeting point determining operation or to perform route guiding, as described later.

When an instruction to perform a route search is input, the ordinal data and the destination/on-route related data output from the destination setting unit 170 are input to the route searching unit 180. Based on the ordinal data and the destination/on-route related data, the route searching unit 180 refers to the map data stored in the data storage unit 140, and sets a route that contains the meeting point. Also, the route searching unit 180 outputs the set route as route data to the route guiding unit 190.

The route data set by the route searching unit 180 is input to the route guiding unit 190. When performing route guiding under the control of the system control unit 270, the route guiding unit 190 performs a correcting operation such as map matching, and performs a route guiding operation, based on the input route data, the own vehicle location data that is output from the I/F 130, and the map data.

More specifically, under the control of the system control unit 270, the route guiding unit 190 causes the display unit 230 to display a route and route guidance information on a map indicating the surrounding area including the current location of the vehicle. The route guiding unit 190 also causes the voice processing circuit 250 to output the travel route information as voice information.

Under the control of the system control unit 270, the route guiding unit 190 also manages data such as the stored map data for route guiding operations, while performing route guiding. During the route guiding, the route guiding unit 190 obtains the map data and the likes to be displayed from the data storage unit 140, and outputs the obtained map data and the likes to the display unit 230 via the display control unit 240.

The operating unit 200 is formed with a remote control device having many keys including various confirmation buttons and a numeric keypad. Particularly, the operating unit 200 is used by the operator to input instructions such as an instruction to display vehicle travel information, an instruction to input or set the destination to be reached by the vehicle, and an operation to determine a meeting point.

More specifically, when a meeting point is determined in a meeting point determining operation based on the data as the requirement for determining an area including the meeting point and the facility characteristics data, the operating unit 200 of this embodiment is used for registering the preference data that is the data serving as the requirements used for reflecting the preferences of the operator in the ROM/RAM 280. When a predetermined instruction is selected by the operator in a meeting point determining operation, the operating unit 200 is used for the instruction to reflect the preferences of the operator.

The preference data as the requirement data to be used for determining a meeting area may contain the data indicating that the meeting area is limited to an area before the entrance of an expressway or a freeway, that the meeting area is limited to an area before the exit of an expressway or a freeway, that the meeting area is limited to an area in which the allowed time at the meeting point is the shortest, or that the meeting area is limited to such an area that minimizes the travel distance as a route.

The preference data as the requirement data to be used for determining a meeting point may also contain the data indicating the preferences of the operator to be used for determining a meeting point in a meeting area based on the facility characteristics data indicating the categories of facilities for determining the meeting point, such as convenience stores, restaurants, rest areas, and parking areas, the opening hours of those facilities, the parking lots of those facilities, the area of each of the parking lots, and the capacity of each of the parking lots.

The preference data is registered in the ROM/RAM 280 through the operating unit 200, before a route guiding operation including a meeting point determining operation is performed.

Speech voices and the likes generated from the operator is input to the voice recognition circuit 220 through the microphone 210. For example, the voice recognition circuit 220 analyzes a speech voice that is input as an operation command for the navigation apparatus 100, and outputs the analysis result to the system control unit 270.

The display unit 230 is formed with a liquid crystal display element or an EL (Electro Luminescence) element, for example. Under the control of the display control unit 240, the display unit 230 displays the map data and the likes in various forms, and displays various kinds of information such as the current location of its own vehicle that are necessary for route guiding. The various kinds of information are superimposed on the map data and the likes.

The map data and the likes that are input via the system control unit 270 and content data and the likes are input to the display control unit 240. In accordance with an instruction from the system control unit 270, the display control unit 240 generates display data to be displayed on the display unit 230, and temporarily stores the display data in the buffer memory 245. The display control unit 240 reads out the display data from the buffer memory 245 in predetermined timing, and outputs the display data to the display unit 230.

In accordance with an instruction from the system control unit 270, the voice processing circuit 250 generates an audio signal, and amplifies the audio signal through the speaker 260. For example, the voice processing circuit 250 outputs the information indicating the travel direction of the vehicle at the next intersection or a driving instruction as an audio signal to the speaker 260.

The system control unit 270 is formed with a central processing unit (CPU), and includes various input/output ports such as a GPS receiving port, a key input port, and a display control port. With this structure, the system control unit 270 collectively controls all the functions for route guiding operations.

When a route guiding operation is performed, the system control unit 270 reads out a control program stored in the ROM/RAM 280, and executes each process in accordance with the control program. The system control unit 270 temporarily stores the data being processed in the ROM/RAM 280. In this embodiment, the system control unit 270 is designed to perform the above described meeting point determining operation and the route guiding operation.

The meeting point determining operation and the route guiding operation to be performed by the system control unit 270 of this embodiment will be described later in detail.

The control programs to be used for performing predetermined operations are stored in the ROM/RAM 280. Also, the ROM/RAM 280 holds the predetermined data to be used for performing the meeting point determining operation or the route guiding operation, such as the route guidance data, the current location data, and the characteristics data that are obtained from the other vehicle navigation apparatus, the current location data indicating the current location of its own vehicle, and the preference data.

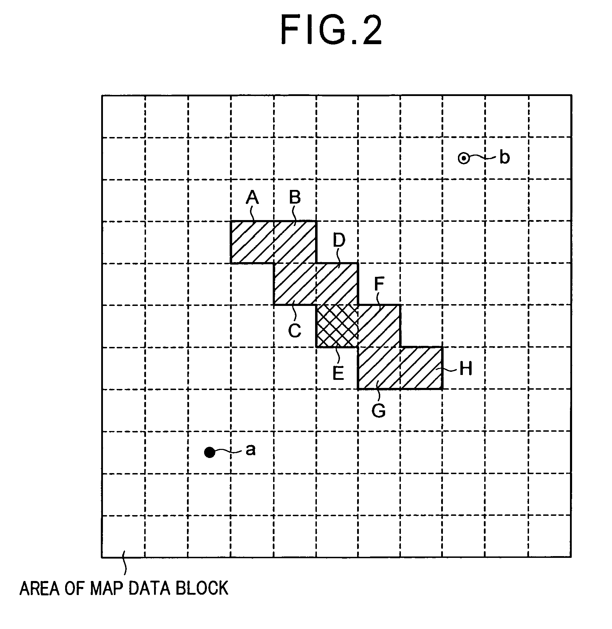

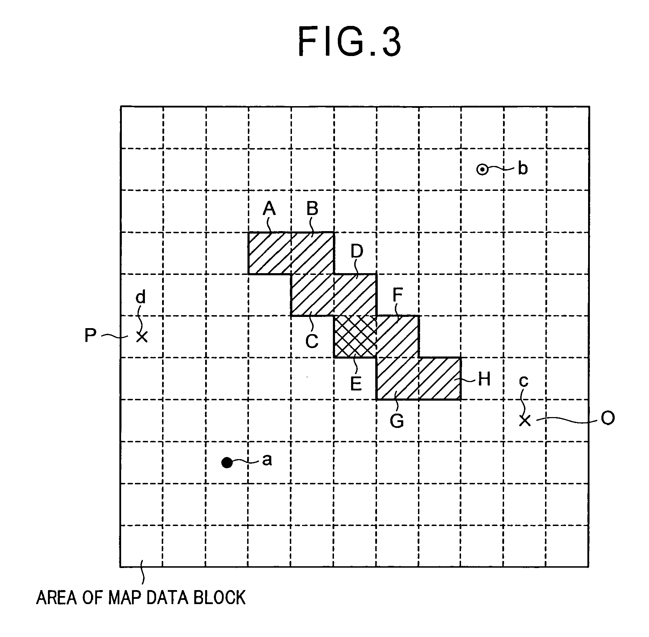

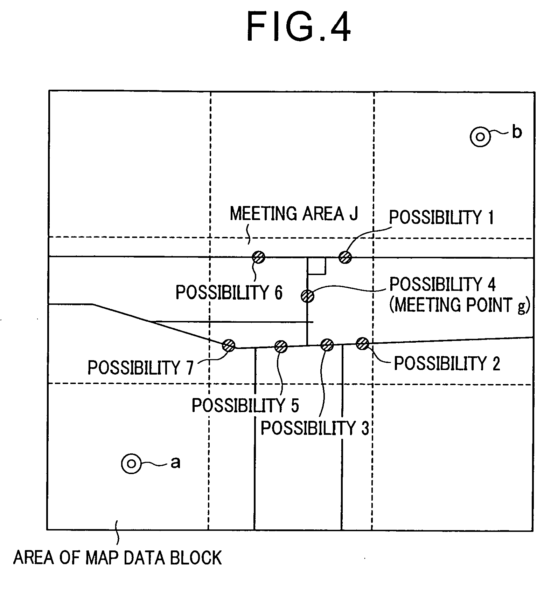

Referring now to Figs. 2 through 4, the meeting point determining unit 160 of this embodiment is described. Figs. 2 and 3 illustrate the method to be utilized by the meeting point determining unit 160 of this embodiment to determine a meeting area. Fig. 4 illustrates the method to be utilized by the meeting point determining unit 160 of this embodiment to determine a meeting point based on the road characteristics information.

As described above, the meeting point determining unit 160 performs an area determining operation to determine a meeting area based on the current location and the destination of its own vehicle and the current location and the destination of the other vehicle, and performs a meeting point determining operation to determine a meeting point that exists within the meeting area according to an instruction of the operator and is the point according to the operator instruction.

If the point according to an operator instruction is determined to be a meeting point without a determined meeting area, it is necessary to search the entire map stored in the data storage unit for the corresponding point, and there are many possibilities for the meeting point. As a result, a long period of time is required for detecting the possible meeting points and determining a meeting point from the possible meeting points, and the operation load is increased.

To counter this problem, the meeting point determining unit 160 of this embodiment first performs an area determining operation to determine a meeting area that might contain a meeting point. The meeting point determining unit 160 then performs a meeting point determining operation to determine a meeting point existing within the determined meeting area.

First, the area determining operation to be performed by the meeting point determining unit 160 is described.

When performing a meeting point determining operation, the meeting point determining unit 160 of this embodiment determines a meeting area based on the current locations of own vehicle and the other vehicle, in a case where route guiding has not been performed for own vehicle and the other vehicle. In a case where route guiding has been performed for at least one of own vehicle and the other vehicle or where route guiding has been performed for both own vehicle and the other vehicle but the destinations are different from each other, the meeting point determining unit 160 determines a meeting area, based on the current locations and the destinations of own vehicle and the other vehicle. In a case where route guiding has been performed for both own vehicle and the other vehicle, and the destinations of own vehicle and the other vehicle are the same, the meeting point determining unit 160 determines a meeting area, based on the registered preference data of the operator.

In the case where route guiding has not been performed for both own vehicle and the other vehicle, the meeting point determining unit 160 of this embodiment determines a meeting area based on the current locations of own vehicle and the other vehicle, since destinations have not been set for own vehicle and the other vehicle.

More specifically, in the case where route guiding has not been performed for both own vehicle and the other vehicle, the meeting point determining unit 160 of this embodiment calculates the distance or the required amount of time between the current location of own vehicle and each predetermined area on the map, and the distance or the required amount of time between the current location of the other vehicle and each area. The meeting point determining unit 160 then calculates the difference between the calculated distances or the difference between the calculated required amounts of time. The meeting point determining unit 160 determines areas having the smaller difference to be meeting areas.

For example, in a case where the map data stored in the data storage unit is divided into map data blocks representing the areas predetermined on the map, the meeting point determining unit 160 of this embodiment calculates the distance between the current location a of own vehicle and the area of each map data block, and the distance between the current location b and each area. The meeting point determining unit 160 then determines areas A through H having smaller differences in distance to be meeting areas, as shown in Fig. 2.

The meeting point determining unit 160 of this embodiment determines meeting areas that are the area in which the difference between the distance between the current location of own vehicle and each area and the distance between the current location of the other vehicle and each area is the smallest, and the area within a range predetermined on the basis of the smallest difference in distance.

In the case where route guiding has been performed for one of own vehicle and the other vehicle, or where route guiding has been performed for both own vehicle and the other vehicle but the destinations are different from each other, at least one of own vehicle and the other vehicle has a set destination. Accordingly, in a meeting point determining operation, the meeting point determining unit 160 of this embodiment determines a meeting area, based on the current locations of own vehicle and the other vehicle and the destination set for at least one of own vehicle and the other vehicle.

More specifically, in the case where route guiding has been performed for one of own vehicle and the other vehicle, or where route guiding has been performed for both own vehicle and the other vehicle but the destinations are different from each other, the meeting point determining unit 160 of this embodiment determines more than one area, as in the case where route guiding has not been performed for both own vehicle and the other vehicle.

The meeting point determining unit 160 of this embodiment calculates the distance or the required amount of time between the current location of own vehicle and each of the predetermined area on the map, and the distance or the required amount of time between the current location of the other vehicle and each area. The meeting point determining unit 160 then calculates the difference between the calculated distances or the difference between the calculated required amounts of time. The meeting point determining unit 160 determines areas having smaller difference to be meeting areas.

In a case where each of the determined areas is set as a spot on route for the vehicle for which route guiding has been performed or for each vehicle, the meeting point determining unit 160 sets a meeting area that is the area in which the distance or the required amount of time between the current location and the destination is the smallest among the determined areas.

For example, in a case where the map data stored in the data storage unit is divided into map data blocks representing the areas predetermined on the map, when the destination c of own vehicle is set in a map data block O and the destination d of the other vehicle is set in a map data block P, the meeting point determining unit 160 of this embodiment determines the area E to be the meeting area among the areas A through H as the map data blocks, as shown in Fig. 3. In Fig. 3, the distance or the required amount of time between the current location a of own vehicle and the destination c via the area E is the smallest, while the distance or the required amount of time between the current location b of the other vehicle and the destination d via the area E is the smallest.

Meanwhile, in the case where route guiding has been performed for both own vehicle and the other vehicle, and the destinations of own vehicle and the other vehicle are the same, the meeting point determining unit 160 of this embodiment detects the corresponding area based on the preference data, and determines the detected area to be the meeting area in a meeting point determining operation.

For example, in a case where the preference data contains data indicating that an area existing before the entrance of an expressway on a route in accordance with the route guiding for its own vehicle should be a meeting area, or data indicating that an area existing before the exit of an expressway on a route in accordance with the route guiding for its own vehicle should be a meeting area, the meeting point determining unit 160 of this embodiment determines a meeting area that is an area existing before the entrance of an expressway on a route in accordance with the route guiding for its own vehicle, or an area existing before the exit of an expressway on a route in accordance with the route guiding for its own vehicle.

Next, the meeting point determining operation to be performed by the meeting point determining unit 160 is described.

After a meeting area is determined, the meeting point determining unit 160 of this embodiment determines the corresponding meeting point within the determined meeting area in accordance with an instruction that is input from the operator through the operating unit 200.

The meeting point determining unit 160 of this embodiment operates in cooperation with the operating unit 200, the display unit 230, and the display control unit 240. The meeting point determining unit 160 prompts the operator to select an operation to set a meeting point on a road, an operation to set a meeting point in a facility, or an operation not to set a meeting point. After a selected instruction of the operator or an instruction reflecting the preferences of the operator is input, the meeting point determining unit 160 searches the determined meeting area in accordance with the obtained preference data or the instruction from the operator, and determines a meeting point.

More specifically, when an instruction to set a meeting point on a road is selected, the meeting point determining unit 160 of this embodiment sets possible meeting points at the mid points of the roads having the greatest width among the roads existing in the meeting area, based on the road characteristics data stored in the data storage unit. The meeting point determining unit 160 then determines the meeting point to be the mid point of the road from which the distances or the required amounts of time to the current locations of its own vehicle and the other vehicle are the smallest, among the mid points set as the possible meeting points.

For example, in a case where own vehicle exists at the current location a while the other vehicle exist at the current location b, and a map data block J is selected as the meeting area, the meeting point determining unit 160 of this embodiment sets possible meeting points 1 through 7 that are the mid points between the intersections of the respective roads and the next intersections in the meeting area or the mid points between the intersections and the end points of the meeting area, as shown in Fig. 4. The meeting point determining unit 160 then determines a point g to be the meeting point. With respect to the possible meeting points 1 through 7, the distance between the current location a of own vehicle and the meeting point g, and the distance between the current location b of the other vehicle and the meeting point g are the smallest.

If an instruction to set a meeting point in a facility is selected, the meeting point determining unit 160 of this embodiment determines a meeting point in a facility that matches the preference data within the meeting area, based on the facility characteristics data stored in the data storage unit and the registered preference data.

For example, if data indicating "a convenience store with a rest room" is registered beforehand as the preference data, the meeting point determining unit 160 of this embodiment searches the determined meeting area for a "convenience store with a rest room", and determines the corresponding point to be the meeting point.

In a case where there are more than one corresponding facilities, the meeting point determining unit 160 of this embodiment may prompt the operator to select one facility, or may determine the meeting point to be in a facility at which the distance between the current location of its own vehicle and the meeting point and the distance between the current location of the other vehicle and the meeting point become the smallest, as described above. Also, the preference data is not limited to the data indicating the above requirements, but may be any other data that can set requirements for selecting a facility.

If an instruction not to set a meeting point is selected, the meeting point determining unit 160 of this embodiment determines the meeting point to be the location of a "facility with a parking lot" within the meeting area, based on the facility characteristics data stored in the data storage unit.

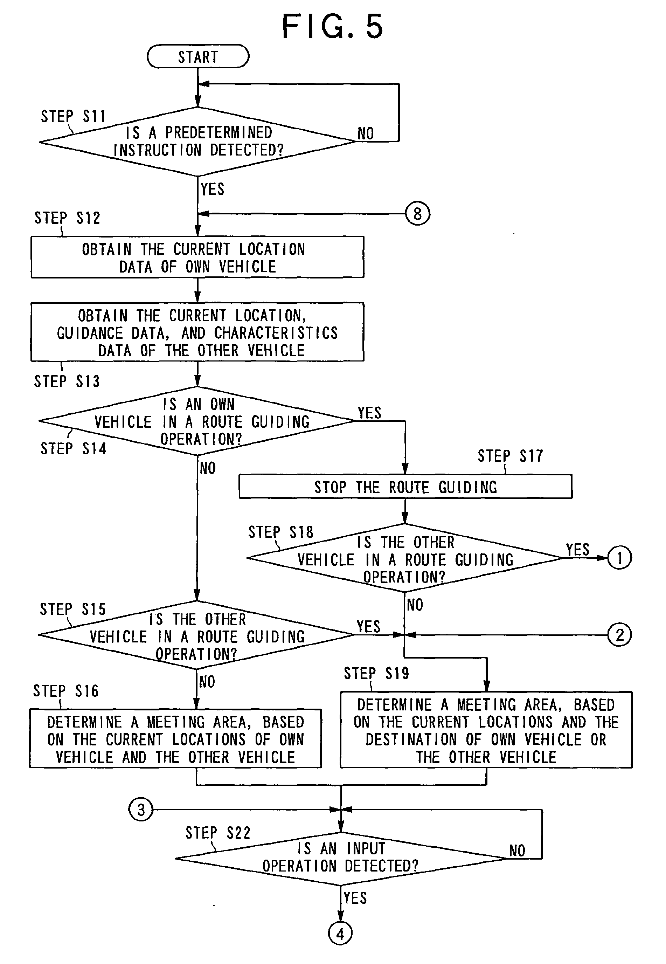

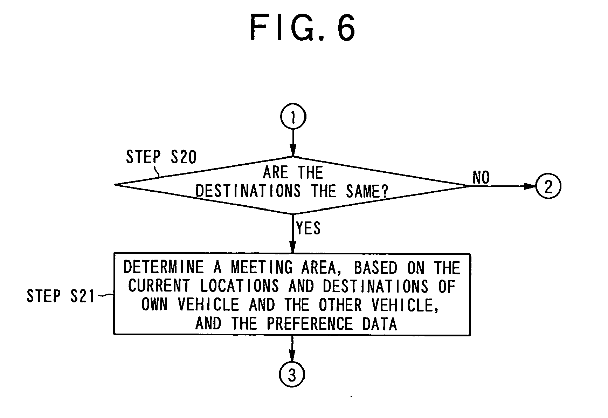

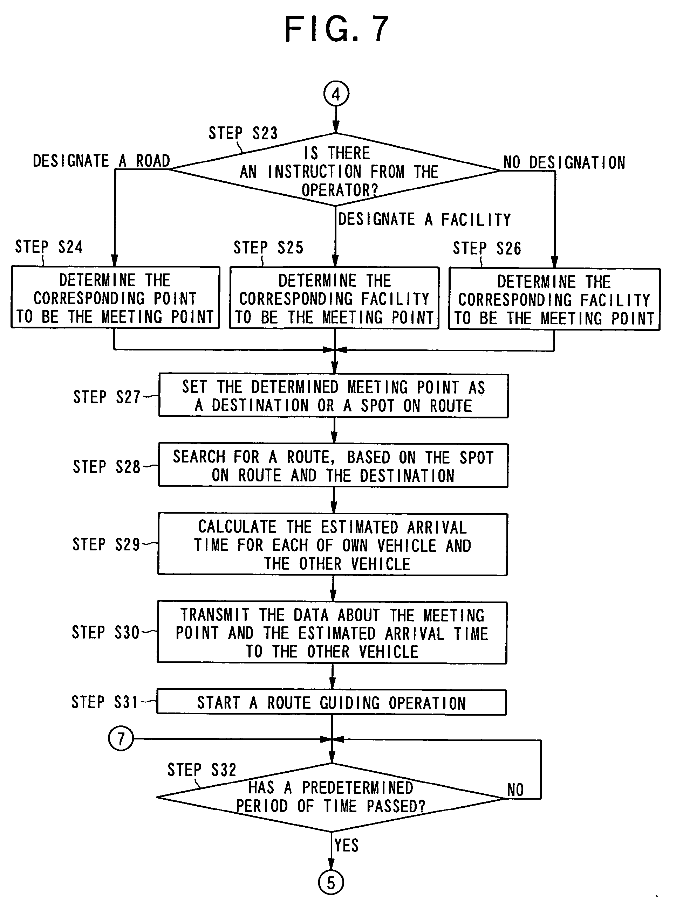

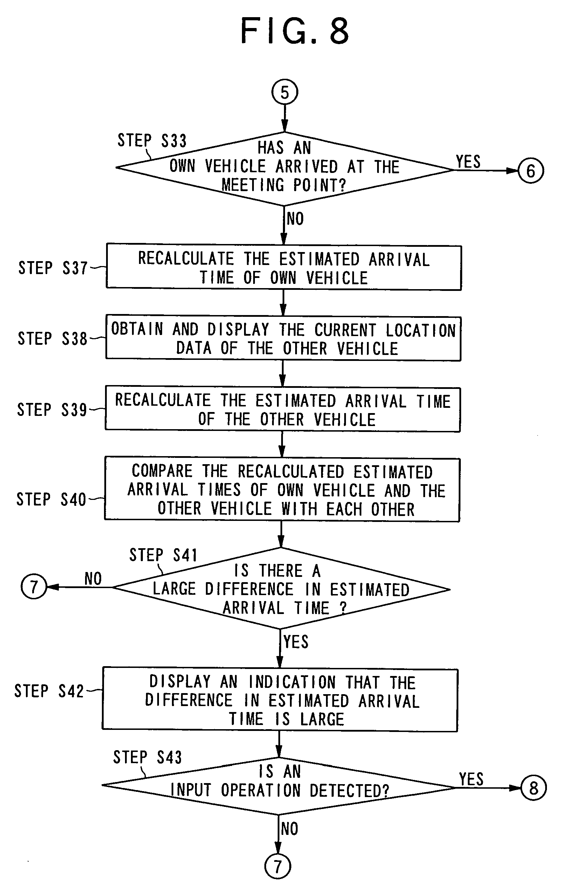

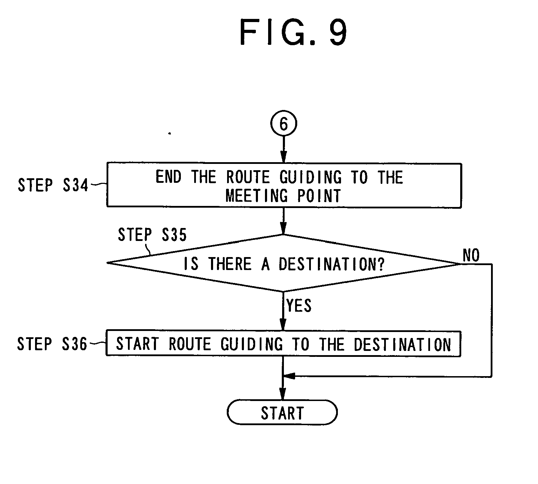

Referring now to Figs. 5 through 9, the meeting point determining operation and the route guiding operation to be performed by the system control unit 270 of this embodiment are described. Figs. 5 through 9 are flowcharts showing the meeting point determining operation and the route guiding operation to be performed by the system control unit 270 of this embodiment.

In a case where the characteristics data of the other vehicle is stored beforehand in a predetermined memory in the other vehicle navigation apparatus, and route guiding has been performed for the other vehicle, the route guidance data concerning the route guiding is also stored beforehand in the memory.

In a case where the predetermined preference data is registered beforehand in the ROM/RAM 280 in the navigation apparatus 100 of own vehicle, and route guiding has been performed for own vehicle, the ordinal data is also stored beforehand in the ROM/RAM 280.

The other vehicle navigation apparatus for which the meeting point determining operation is to be performed is determined beforehand, and the other vehicle navigation apparatus 100 transmits various kinds of data to be used in this operation, such as the current location data and the route guidance data.

First, an instruction to perform a route guiding operation including a meeting point determining operation is input from the operator through the operating unit 200, and the system control unit 270 detects the input of the instruction to perform the route guiding operation (step S11). The system control unit 270 obtains the current location data indicating the current location of own vehicle from the GPS receiving unit 110 and the sensor unit 120 via the I/F 130 (step S12).

The system control unit 270 then prompts the communication control unit 150 to establish a communication line with the other vehicle navigation apparatus, and obtains the current location data, the characteristics data, and the route guidance data of the other vehicle stored in the other vehicle navigation apparatus (step S13).

The system control unit 270 determines whether the own vehicle navigation apparatus 100 is in a route guiding operation (step S14). If the own vehicle navigation apparatus 100 is not in a route guiding operation, this operation moves on to step S15. If the own vehicle navigation apparatus 100 is in a route guiding operation, this operation moves on to step S17.

The system control unit 270 then determines whether the other vehicle navigation apparatus is in a route guiding operation, based on the obtained route guidance data of the other vehicle (step S15). If the other vehicle navigation apparatus is not in a route guiding operation, this operation moves on to step S16. If the other vehicle navigation apparatus is in a route guiding operation, this operation moves on to step S19.

If the other vehicle navigation apparatus is determined not to be in a route guiding operation in step S15, the system control unit 270 causes the meeting point determining unit 160 to determine a meeting area, based on the obtained current location data of the other vehicle and the current location data of its own vehicle. The system control unit 270 also causes the display unit 230 to display a selection screen from which an instruction concerning a meeting point is to be selected by the operator, and awaits an input from the operator (step S16) .

More specifically, the meeting point determining unit 160 calculates the distance or the required amount of time between the current location of own vehicle and each area predetermined on the map, and calculates the distance or the required amount of time between the current location of the other vehicle and each area. The meeting point determining unit 160 then calculates the difference between the calculated distances or the difference between the required amounts of time with respect to each of the areas, and determines the areas having the smaller differences to be meeting areas, as described above.

If the system control unit 270 determines that the own vehicle navigation apparatus 100 is determined to be in a route guiding operation in step S14, the system control unit 270 stops the route guiding in progress (step S17), and determines whether the other vehicle navigation apparatus is in a route guiding operation, based on the obtained route guidance data of the other vehicle (step S18).

If the system control unit 270 determines that the other vehicle navigation apparatus is in a route guiding operation, the system control unit 270 moves on to step S20.

If the system control unit 270 determines that the other vehicle navigation apparatus is not in a route guiding operation, the system control unit 270 causes the meeting point determining unit 160 to determine a meeting area, based on the destination and the spot on route indicated by the ordinal data and the current location data of own vehicle, or based on the destination and the spot on route indicated by the obtained route guidance data and the current location data of the other vehicle. The system control unit 270 also causes the display unit 230 to display a selection screen from which an instruction concerning a meeting point is to be selected by the operator, and awaits an input from the operator (step S19).

More specifically, the meeting point determining unit 160 calculates the distance or the required amount of time between the current location of own vehicle and each of the areas predetermined on the map, and the distance or the required amount of time between the current location of the other vehicle and each of the areas. The meeting point determining unit 160 then calculates the difference between the calculated distances or the difference between the required amounts of time for each of the area, and determines the areas having the smaller differences to be the meeting areas, as described above. In a case where each of the determined meeting areas is set as a spot on route for the vehicle in a route guiding operation or for each vehicle, the meeting point determining unit 160 determines the meeting area to be the area having the smallest distance or the smallest required amount of time between the current location and the destination. The system control unit 270 also controls the display control unit 240 so that the display unit 230 displays a selection screen from which the operator is to select an instruction to set a meeting point on a road, an instruction to set a meeting point in a facility, or an instruction not to set a meeting point. The system control unit 270 then awaits a selection input from the operator.

In a case where the procedure of step S19 is to be carried out in accordance with the result of step S15, the meeting point determining unit 160 determines a meeting area, based on the current location of own vehicle, and the current location, the spot on route, and the destination of the other vehicle. In a case where the procedure of step S19 is to be carried out in accordance with the result of step S18, the meeting point determining unit 160 determines a meeting area, based on the current location, the spot on route, and the destination of own vehicle. In a case where the procedure of step S19 is to be carried out in accordance with the result of step S20, the meeting point determining unit 160 determines a meeting area, based on the current locations, the spots on route, and the destinations of own vehicle and the other vehicle.

If the system control unit 270 determines that the other vehicle navigation apparatus is in a route guiding operation in step S18, the system control unit 270 determines whether the destination indicated by the ordinal data of own vehicle is the same as the destination indicated by the obtained route guidance data of the other vehicle (step S19).

If the system control unit 270 determines that the destinations of own vehicle and the other vehicle are not the same, the system control unit 270 moves on to step S19.

If the system control unit 270 determines that the destinations of own vehicle and the other vehicle are the same, the system control unit 270 causes the meeting point determining unit 160 to determine a meeting area to be searched for a meeting point, based on the current locations indicated by the current location data of own vehicle and the other vehicle, the same destinations, and the registeredpreference data of the operator. The system control unit 270 also causes the display unit 230 to display a selection screen from which an instruction concerning a meeting point is to be selected by the operator, and awaits an input from the operator (step S21). More specifically, the meeting point determining unit 160 reads out the preference data stored in the ROM/RAM 280, and determines the area according to the preference data to be the meeting area.

After the meeting area is determined in step S16, step S19, and step S21, the system control unit 270 detects a selection input from the operator through the operating unit 200 (step S22). The system control unit 270 then determines the type of the selection input (step S23).

If the selection input is determined to be an instruction to set a meeting point on a road, the system control unit 270 sets "road" as the search requirement for determining a meeting point in the meeting area, and determines a point on the corresponding road to be the meeting point (step S24).

More specifically, the meeting point determining unit 160 sets possible meeting points at the mid points of the roads having the greatest widths among the roads existing in the meeting area, based on the road characteristics data stored in the data storage unit. The meeting point determining unit 160 then sets the meeting point at the mid point of the road to which the distances or the required amounts of time from the current locations of own vehicle and the other vehicle are the smallest, among the mid points of the roads set as the possible meeting points.

If an instruction to set a meeting point in a facility is detected, the system control unit 270 sets "facility" as the search requirement for determining a meeting point in the meeting area, and determines a point in the corresponding facility to be the meeting point, based on the registered preference data (step S25).

More specifically, based on the facility characteristics data stored in the data storage unit and the registered preference data, the meeting point determining unit 160 determines the meeting point to be a point in the facility according to the preference data in the meeting area.

If an instruction not to set a meeting point is detected, the system control unit 270 sets "facility with a parking lot" as the search requirement for determining a meeting point in the meeting area, and determines the meeting point in the facility according to the registered preference data (step S26).

More specifically, based on the facility characteristics data stored in the data storage unit, the meeting point determining unit 160 determines the meeting point to be a point in the "facility with a parking lot" existing in the meeting area.

The system control unit 270 then causes the route setting unit to set a destination or a spot on route at the determined meeting point (step S27). Based on the set spot on route or the set destination, the system control unit 270 causes the route searching unit 180 to search for the route from the actual point to the destination, and sets the route (step S28).

More specifically, in a case where the meeting point determining operation is performed during a route guiding operation, the route setting unit in step S27 sets the determined meeting spot as a spot on route in the ordinal data stored in the ROM/RAM 280. If spots on route have already been set in the ordinal data, the route setting unit sets the meeting point at the top spot on route among the spots on route. In a case where the meeting point determining operation is not performed during a route guiding operation, the route setting unit generates the ordinal data having the determined meeting point as the destination, and outputs the ordinal data to the route searching unit 180. In step S28, the route searching unit 180 sets a route, based on the input ordinal data, and outputs the set route as route data to the route guiding unit 190.

Based on the set route, the system control unit 270 calculates an estimated arrival time at which own vehicle and the other vehicle should arrive at the determined meeting point (step S29). The system control unit 270 then causes the communication control unit 150 to transmit the data to be required in the other vehicle navigation apparatus, such the spot data indicating the determined meeting spot, the route data, and the data indicating the estimated arrival time (step S30).

Based on the route data set in the route guiding unit 190, the system control unit 270 starts route guiding for its own vehicle (step S31). More specifically, the system control unit 270 instructs the route guiding unit 190 to perform route guiding, and, in accordance with the instruction, the route guiding unit 190 starts route guiding. After the start of the route guiding, the route guiding unit 190, under the control of the system control unit 270, obtains the current location data, and operates in cooperation with the display unit 230. In this manner, the route guiding unit 190 performs route guiding for its own vehicle, based on the route data.

The system control unit 270 then causes the route guiding unit 190 to determine whether a predetermined amount of time has passed (step S32). More specifically, the route guiding unit 190 determines whether its own vehicle has passed an intersection, whether its own vehicle takes a turn at an intersection, or the predetermined amount of time has passed.

In a case where the route guiding unit 190 determines that the predetermined amount of time has passed, the system control unit 270 obtains the current location data of its own vehicle, and determines whether the current location is at the meeting location set at the destination or a spot on route (step S33).

If the system control unit 270 determines that the current location is at the meeting point, the system control unit 270 ends the route guiding to the meeting point (step S34), and determines whether the destination of the route guiding unit 190 exits (step S35).

If the destination does not exist in step S35, the system control unit 270 ends this operation.

If the destination of the route guiding unit 190 exists, the system control unit 270 starts route guiding to the destination (step S36), and ends this operation.

After the start of the route guiding, the route guiding unit 190, under the control of the system control unit 270, obtains the current location data and operates in cooperation with the display unit 230. In this manner, the route guiding unit 190 performs the route guiding for its own vehicle, based on the route data.

If the system control unit 270 in step S33 determines that the current location is not at the meeting point, the system control unit 270 again calculates the estimated arrival time of its own vehicle, based on the current location data and the data concerning the meeting point set as a destination or a spot on route (step S37).

The system control unit 270 then causes the communication control unit 150 to obtain the current location data of the other vehicle (step S38). The system control unit 270 also causes the display unit 230 to display the current location of the other vehicle, and again calculates the estimated arrival time of the other vehicle at the meeting point (step S39).

The system control unit 270 then compares the estimated arrival time of its own vehicle with the estimated arrival time of the other vehicle at the meeting point (step S40), and determines whether the difference in estimated arrival time is larger than a predetermined value (step S41).

If the difference in estimated arrival time is small, the system control unit 270 moves on to step S32. If the difference in estimated arrival time is large, the system control unit 270 causes the display unit 230 to display an indication that the difference in estimated arrival time is large, and to display a selection screen through which the operator inputs an instruction to change or not to change the meeting point (step S42). The system control unit 270 then awaits an instruction input.

When the system control unit 270 receives an instruction to change the meeting point from the operator through the operating unit 200 (step S43), the system control unit 270 moves on to step S12. If the system control unit 270 does not receive an instruction to change the meeting point from the operator through the operating unit 200 within a predetermined period of time, or the system control unit 270 receives an instruction not to change the meeting point (step S43), the system control unit 270 moves on to step S32.

As described above, the navigation apparatus 100 of this embodiment is mounted on a vehicle, and determines a meeting point at which its own vehicle is to meet the other vehicle. The navigation apparatus 100 then performs route guiding to the meeting point. The navigation apparatus 100 includes: the data storage unit 140 in which the map data is stored together with one of the road data including the road characteristics data indicating road characteristics and the facility data including the facility characteristics data indicating facility characteristics; the GPS receiving unit 110 and the sensor unit 120 that obtain the own vehicle current location data indicating the current location of the vehicle to be guided through a route; the communication control unit 150 that obtains the other vehicle current location data indicating the current location of the other vehicle; the meeting point determining unit 160 that determines the meeting point at which own vehicle is to meet the other vehicle, based on the obtained own vehicle current location data, the obtained other vehicle current location data, and at least one of the stored road characteristics data and the stored facility characteristics data; and the route guiding unit 190 that performs a route guiding operation, based on the determined meeting point.

With this structure, the navigation apparatus 100 of this embodiment can determine a meeting point at which own vehicle is to meet the other vehicle, based on the information about facilities or the information about roads. Accordingly, the navigation apparatus 100 of this embodiment can determine a meeting point with high precision.

The navigation apparatus 100 of this embodiment further includes the operating unit 200 to be used for inputting the preferences of the operator as the preference data or for inputting an instruction reflecting the preferences of the operator. Based on the obtained current location data of own vehicle, the obtained current location data of the other vehicle, at least one of the stored road characteristics data and the stored facility characteristics data, and at least one of the input preference data and the input instruction, the meeting point determining unit 160 can determine the meeting point at which own vehicle is to meet the other vehicle.

With this structure, the navigation apparatus 100 of this embodiment can determine the meeting point at which own vehicle is to meet the other vehicle, based on the information about facilities or the information about roads. Accordingly, the navigation apparatus 100 of this embodiment can determine the meeting point with high precision, and can determine the meeting point reflecting the preferences of the operator.

In the navigation apparatus 100 of this embodiment, the data storage unit also stores the width data indicating the width of each road as the road characteristics data.

As the width data indicating the width of each road is stored as the road characteristics data, the navigation apparatus 100 of this embodiment can determine the meeting point based on the width data. Accordingly, the meeting point can be determined at a point on a road that does not hinder traffic and has a reasonable space for the meeting.

In the navigation apparatus 100 of this embodiment, at least one of the category data indicating the categories of facilities, the data about the parking lots of the facilities, and the data about the opening hours of the facilities is stored as the facility characteristics data in the data storage unit.

Since the category data indicating the categories of facilities, the data about the parking lots of the facilities, or the data about the opening hours of the facilities is stored as the facility characteristics data, the navigation apparatus 100 of this embodiment can determine a meeting point, based on the category data indicating the categories of facilities, the data about the parking lots of the facilities, or the data about the opening hours of the facilities. Accordingly, the meeting point can be determined at a point on a road that does not hinder traffic and has a reasonable space for the meeting.

In the navigation apparatus 100 of this embodiment, the meeting point determining unit 160 designates an area that is predetermined on the map data, and then determines a meeting point within the designated area, based on the obtained current location data of own vehicle, the obtained current location data of the other vehicle, and at least one of the stored road characteristics data and the stored facility characteristics data.

With this arrangement, the navigation apparatus 100 of this embodiment designates an area predetermined on the map data, and then determines a meeting point existing within the designated area. Accordingly, the processing load for determining a meeting point can be reduced, and the meeting point can be determined promptly.

In this embodiment, each selection input is input through the operating unit 200. However, instead of the operating unit 200, the voice recognition circuit 220 may be used for inputting each selection input in the form of a speech voice of the operator.

In this embodiment, the road width information is used as the road characteristics data in determining a meeting point. However, a meeting point may be determined based on information indicating the types of roads, such as national roads or prefectural roads.

In this embodiment, the features of facilities such as the categories of the facilities, the parking lots of the facilities, and the capacity of each parking lot are used as the preference data to be used in designating a facility as a meeting point. However, some other data indicating the features of facilities, such as the data indicating detailed categories and the data indicating parking limits, may be stored or registered as the facility characteristics data.

In this embodiment, the operator selects an instruction concerning a meeting point, an instruction to change the meeting point, or an instruction not to change the meeting point. However, those settings may be designated in advance, and operations may be performed according to the predetermined settings.

Every time a meeting point determining operation is performed, or when an estimated arrival time is calculated, the current location data of own vehicle and the other vehicle or the estimated arrival time data may be stored. The stored estimated arrival time data may be used in calculating the next estimated arrival time of own vehicle or the other vehicle, so as to increase the accuracy of the calculation of the estimated arrival time. For example, every time an estimated arrival time is calculated, the meeting point determining unit 160 may calculate the speed of own vehicle or the other vehicle, based on the current location data. The meeting point determining unit 160 may then compare the calculated speed with the speed used in calculating the estimated arrival time, and calculate the estimated arrival time.

Also, a time limit may be set on estimated arrival times, and an operation to be performed when it runs past the time limit may be specified in advance. For example, in a case where lunch is promised at the meeting, the meeting point is changed from a spot suitable for lunch to a spot suitable for parking, if the arrival time is delayed.

In this embodiment, a meeting point at which own vehicle having the own vehicle navigation apparatus 100 mounted thereon is to meet the other vehicle having the other vehicle navigation apparatus 100 mounted thereon is determined. However, a meeting point at which own vehicle is to meet other vehicles each having the other vehicle navigation apparatus 100 mounted thereon may be determined. In such a case, the meeting point determining unit 160 obtains predetermined data from each navigation apparatus 100, performs the above calculating operation for each navigating operation, and then determines a meeting area and a meeting point.

Also, a meeting point may be determined, with traffic information such as VICS information being taken into consideration. In such a case, the meeting point determining unit 160 determines a meeting area and a meeting point, based on a required amount of time based on the traffic information.

In this embodiment, the system control unit 270 performs a route guiding operation. However, a computer and a recording medium may be provided in the navigation apparatus 100 having the information recording medium storing the map data. A control program to be executed to perform the route guiding operation is recorded on the recording medium, and the computer reads the control program so as to perform the above route guiding operation.

In this embodiment, the above meeting point determining operation is performed by the navigation apparatus 100 mounted on each vehicle. However, the above meeting point determining operation may be performed through data communications with a server device that is provided and fixed in a given position.

In such a case, each navigation apparatus 100 should have a transmitting unit that transmits the data obtained by the GPS receiving unit 110 and the sensor unit 120 to the server device, and a receiving unit that receives route data containing a meeting point set by the server device. Such navigation apparatuses 100 and the server device constitute a navigation system. In such a system, each navigation apparatus 100 performs a route guiding operation, based on the received route data including a meeting point.

In this embodiment, the meeting point determining unit 160 determines a meeting point in a meeting point determining operation, based on the facility characteristics data that is registered in advance. However, vacancy information as to the parking lot of each facility may be obtained by performing a data communication with a predetermined server device, and a meeting point may be determined based on the obtained vacancy information.

In such a case, the server device determines the availability of each parking lot, based on a detection signal transmitted from an optical sensor or a mechanical sensor installed in each parking space of the parking lots of facilities, or by analyzing an image picked up by an image pick-up camera installed in each parking space. The determination result is stored as preset information in the navigation apparatus 100 in an accessible fashion.

In this embodiment, the navigation apparatus 100 mounted on a vehicle performs route guiding operations. However, route guiding operations may be performed by a portable terminal device such as a mobile telephone device.

In such a case, the above described meeting point determining operation is performed by recognizing the location of the portable terminal device, based on communication waves that are used for communications between the portable terminal device and base stations. The determined meeting point is then displayed on the portable terminal device, so as to guide the user to the destination.

It should be noted that the present invention is not limited to the above embodiments. The above embodiments are merely examples, and any structures may be within the technical scope of the invention, as long as they are formed on the basis of the same technical ideas disclosed in the claims and have the same effects as those ideas.

The entire disclosures of Japanese Patent Application (No. 2005-103005), filed on March 31, 2005, including the specification, the claims, the drawings, and the abstract, are incorporated herein by reference.

## Claims

1. A navigation apparatus that determines a meeting point at which a mobile object is to meet the other mobile object, and that is mounted on the mobile object to be guided through a route to the meeting point,
the navigation apparatus comprising:
strage means for storing map data and at least one of road data including road characteristics data indicating road characteristics and facility data including facility characteristics data indicating facility characteristics;
fiest acquiring meansfor acquiring first current location data indicating a current location of the mobile object to be route-guided;
second acquiring means for acquiring second current location data indicating a current location of the other mobile object;
determining means for determining the meeting point to meet the other mobile object, based on the acquired first current location data, the acquired second current location data, and at least one of the stored road characteristics data and the stored facility characteristics data; and
route guiding means for performing a route guiding operation, based on the determined meeting point.

2. The navigation apparatus according to claim 1, further comprising:
operating means for being used to input at least one of preference data indicating preferences of an operator and an instruction reflecting the preferences of the operator,
wherein the determining means determines the meeting point to meet the other mobile object, based on the acquired first current location data, the acquired second current location data, at least one of the stored road characteristics data and the stored facility characteristics data, and at least one of the input preference data and the input instruction.

3. The navigation apparatus according to claim 1,
wherein at least one of width data indicating a width of each road and type data indicating the type of each road is stored as the road characteristics data in the storage means.

4. The navigation apparatus according to claim 1,
wherein at least one of type data indicating the type of each facility, data about a parking lot of each facility, and data about opening hours of each facility is stored as the facility characteristics data in the storage means.

5. The navigation apparatus according to claim 1,
wherein the determining means determines an area predetermined on the map data, and determines the meeting point existing within the determined area, based on the acquired first current location data, the acquired second current location data, and at least one of the stored road characteristics data and the stored facility characteristics data.

6. The navigation apparatus according to claim 1, further comprising:
calculating means for calculating an arrival time of the mobile object to be route-guided at the determinedmeeting point; and
third acquiring means for acquiring arrival time information indicating an arrival time of the other mobile obj ect at the meeting point,
wherein the determining means changes the meeting point, based on the calculated arrival time and the acquired arrival time.

7. A server device in a navigation system that determines a meeting point of a mobile object and the other mobile object, and performs route guiding to the meeting point,
the server device comprising:
storage means for storing map data and at least one of road data including road characteristics data indicating road characteristics and facility data including facility characteristics data indicating facility characteristics;
first acquiring means for acquiring first current location data indicating a current location of the mobile object;
second acquiring means for acquiring second current location data indicating a current location of the other mobile object;
determining means for determining the meeting point to meet the other mobile obj ect, based on the acquired first current location data, the acquired second current location data, and at least one of the stored road characteristics data and the stored facility characteristics data; and
transmitting means for transmitting route guidance information for performing route guiding based on the determined meeting point to a navigation apparatus mounted on each mobile object.

8. A navigation method for determining a meeting point at which a mobile object is to meet the other mobile object, and guiding the mobile object through a route to the meeting point,
the navigation method comprising:
first step for acquiring first current location data indicating a current location of the mobile object;
second step for acquiring second current location data indicating a current location of the other mobile object;
determining step for determining the meeting point to meet the other mobile object, based on the acquired first current location data, the acquired second current location data, and one of road data including road characteristics data indicating road characteristics and facility data including facility characteristics data indicating facility characteristics, the road data and the facility data being stored together with map data in storage means; and
route guiding step for performing a route guiding operation, based on the determined meeting point.

9. A navigation program to be executed by a computer to determine a meeting point of a mobile object and the other mobile object, and to perform route guiding to the meeting point,
the navigation program being executed to cause the computer to function as:
first acquiring means for acquiring first current location data indicating a current location of the mobile object;
second acquiring means for acquiring second current location data indicating a current location of the other mobile object;
determining means for determining the meeting point to meet the other mobile object, based on the acquired first current location data, the acquired second current location data, and one of road data including road characteristics data indicating road characteristics and facility data including facility characteristics data indicating facility characteristics, the road data and the facility data being stored together with map data in storage means; and
route guiding means for performing a route guiding operation, based on the determined meeting point.
